# EUROPÄISCHE PATENTSCHRIFT

(11) **EP 3 389 941 B1**
(45) Veröffentlichungstag und Bekanntmachung des Hinweises auf die Patenterteilung: **20.04.2022**
(21) Anmeldenummer: 16777666.5
(22) Anmeldetag: 04.10.2016
(51) Int. Cl.: B25F 5/00, B25F 5/02, H02K 7/14

(54) **GEHÄUSEDECKEL FÜR EINE HANDWERKZEUGMASCHINE**
HOUSING COVER FOR A HAND-HELD POWER TOOL
COUVERCLE DE BOÎTIER POUR MACHINE-OUTIL PORTATIVE

(30) Priorität: 17.12.2015 DE 102015225783
(43) Veröffentlichungstag der Anmeldung: 24.10.2018
(73) Patentinhaber: Robert Bosch GmbH, 70442 Stuttgart (DE)
(72) Erfinder: ESENWEIN, Florian, 70771 Leinfelden-Echterdingen (DE); STIERLE, Peter, 72124 Pliezhausen (DE); LUTZ, Manfred, 70794 Filderstadt (DE); SCHOMISCH, Thomas, 70794 Filderstadt (DE)
(86) Internationale Anmeldenummer: PCT/EP2016/073601
(87) Internationale Veröffentlichungsnummer: WO 2017/102127

(56) Entgegenhaltungen:
- DE-A1-102008 000 828
- DE-A1-102009 026 516
- DE-B3-102006 023 039
- DE-C- 944 976
- DE-U- 6 609 573
- GB-A- 2 462 938
- JP-A- 2002 283 255
- JP-A- 2010 036 260
- US-A1- 2003 155 142
- US-B1- 6 294 857

## Beschreibung

### Stand der Technik

Die Erfindung betrifft eine Handwerkzeugmaschine gemäß dem Oberbegriff des Anspruchs 1.

Aus DE 10 2006023 039 ist ein Elektrohandwerkzeug mit einem Abdeckelement bekannt. Das Elektrohandwerkzeug weist ein Gehäuse, das aus zwei Längsschalen, in denen ein Motor angeordnet ist, auf. Eine der Längsschalen weist eine Aussparung auf, in die ein ein- oder mehrteiliges Abdeckelement entfernbar aufnehmbar ist. Die Aussparung ist so angeordnet, dass bei entferntem Abdeckelement die Kohlebürsten des Motors und/oder eine Elektronik zugänglich ist. Ein Beispiel ist auch aus der GB2462938A, DE6609573U, DE944976C oder DE102006023039B3 bekannt. Der Oberbegriff des Anspruches 1 und 9 ist aus der US6294857B1 bekannt.

### Offenbarung der Erfindung

Aus dem Stand der Technik ergibt sich die Aufgabe ein Elektrohandwerkzeug bereitzustellen, das über ein verbessertes Kühlsystem verfügt.

Die Erfindung betrifft eine Handwerkzeugmaschine mit einem Gehäuse und einem Motor, insbesondere einem Elektromotor. Die Handwerkzeugmaschine kann unter anderem als Bohrmaschine, Schlagbohrer, Schleifmaschine, Fräse, Sägewerkzeug und insbesondere als Winkelschleifer ausgebildet sein. Der Motor ist dazu ausgebildet eine Antriebswelle anzutreiben. Weiterhin weist die Handwerkzeugmaschine ein Werkzeug auf, welches beispielhaft über ein Getriebe mit der Antriebswelle des Elektromotors verbunden sein kann. Das Gehäuse der Handwerkzeugmaschine ist insbesondere als ein Außengehäuse ausgebildet. Das Gehäuse kann aus mehreren Gehäuseelementen bestehen, wie beispielhaft ein Motorgehäuseelement, ein Bürstendeckelgehäuseelement, ein Gehäusehinterteilelement, Gehäusetüllendeckel oder ein Gehäusegriffelement. Das Gehäuse ist insbesondere dazu ausgebildet im Wesentlichen den Elektromotor, die Mechanik, die Elektronik, Schalter und Abtriebswelle der Handwerkzeugmaschine aufzunehmen, zu lagern, positionieren oder zu fixieren. Insbesondere schützt ein Außengehäuse die genannten inneren Komponenten vor einem ungewollten Zugriff eines Anwenders. Bestimmte Gehäuseteile wie beispielsweise das Gehäusegriffelement ist vorzugsweise dazu ausgebildet, einen Griffbereich für den Anwender bereitzustellen. Die Gehäuseelemente können über Verbindungselemente miteinander insbesondere lösbar verbunden werden. Zum Beispiel kann die Verbindung der Gehäuseteile über eine Rastverbindung, eine Schraubverbindung, Hinterschnitte oder durch eine Verbindung über ein Klebemittel etc. erfolgen.

Der Elektromotor, insbesondere ein Universalmotor, umfasst zumindest eine Kohlebürste, insbesondere zwei Kohlebürsten, die dazu ausgebildet ist, einen elektrischen Kontakt zu einem Kollektor des Elektromotors herzustellen. Die Kohlebürste kann insbesondere zwischen dem Motorgehäuseelement und dem Gehäusegriffelement angeordnet sein. Bei industriell eingesetzten Kohlebürsten ist es üblich, das Verschleiß eintreten kann, was einen Austausch der verschlissenen Kohlebürsten mit neuen Kohlebürsten erfordert. Aus diesem Grund sind die Kohlebürsten lösbar innerhalb des Gehäuses angeordnet und über eine Gehäuseöffnung entnehmbar. Das Gehäuse weist ein Gehäusedeckel zum Abdecken der Gehäuseöffnung auf, wobei der Gehäusedeckel als ein lösbarer Teil des Gehäuses ausgebildet ist. Der Gehäusedeckel ist insbesondere als ein Bürstendeckel ausgebildet.

Des Weiteren weist der Gehäusedeckel der erfindungsgemäßen Handwerkzeugmaschine zumindest eine Lufteinlassöffnung auf, die zur Versorgung des Elektromotors mit Kühlluft ausgebildet ist. Die Lufteinlassöffnungen können als Durchlassöffnung im Gehäusedeckel mit verschiedenen geometrische, Formen, beispielsweise rechteckig, ründlich, segelförmig oder rund, ausgebildet sein. Die Form des Gehäusedeckels kann beispielhaft eben oder leicht gebogen ausgebildet sein. Vorteilhaft schließt der Gehäusedeckel in der Gehäuseöffnung bündig mit dem Gehäuse ab, sodass an der Position des Gehäusedeckels keine Erhebung oder Senke entsteht. Vorteilhafterweise können die Lufteinlassöffnungen im Wesentlichen entlang oder radial zu der Längsachse der Handwerkzeugmaschine angeordnet sein, was eine verbesserte Kühlluftzufuhr zur Folge haben kann.

Ferner, wie in Anspruch 1 dargestellt, wird an der Lufteinlassöffnung zumindest ein Filterelement angeordnet sein, welches dazu ausgebildet ist, ein Eindringen von Werkstoffpartikel und Staub in das Gehäuse der Handwerkzeugmaschine zu verhindern. Die Anzahl der Filterelemente kann vorteilhaft der Anzahl der Lufteinlassöffnungen entsprechen. Alternativ ist auch denkbar, dass ein Filterelement sich über eine Mehrzahl an Lufteinlassöffnungen erstreckt. Besonders vorteilhaft ist jeder Lufteinlassöffnung ein Filterelement zugeordnet. Das Filterelement kann aus einem Stoff, Kunststoffelement oder einem anderen Material bestehen, welches dazu ausgebildet ist, wie eine Trennschicht zu wirken. Werkstoffpartikel, Staub oder vergleichbare Verunreinigungen der Kühlluft werden von dem Filterelement aufgehalten und das Eintreten in das Innere des Gehäuses verhindert. Das Filterelement ist vorteilhaft permeabel für Kühlluft ausgebildet. Unter permeabel für Kühlluft soll insbesondere verstanden werden, dass das Filterelement durchlässig für Kühlluft und/oder einen Luftstrom und im Wesentlichen staubdicht ausgebildet ist. Das Filterelement kann innen und/oder außen am Gehäusedeckel, sowie in den Gehäusedeckel eingelassen, angeordnet sein. Weiterhin kann das Filterelement lösbar an dem Gehäusedeckel befestigbar ausgebildet sein, insbesondere durch Einklippsen oder Verkleben. Werkstoffpartikel und Staub, welche durch das Filterelement von der Kühlluft getrennt werden, können sich an dem Filterelement ansammeln. Dies kann bei fortgeschrittener Bedeckung des Filterelements mit Werkstoffpartikeln oder Staub dafür sorgen, dass der durch die Lufteinlassöffnungen angesaugte Kühlluftstrom, und somit auch die Kühlleistung, verringert wird. Um das Filterelement wieder zu regenerieren, ist es denkbar, ein reinigbares Filtermaterial zu verwenden. Alternativ kann das Filterelement ausgetauscht werden.

Des Weiteren ist die zumindest eine Lufteinlassöffnung in der Umgebung, insbesondere in der unmittelbaren Umgebung, der Kohlebürsten, insbesondere radial außen, angeordnet. Unter radial außen soll insbesondere radial zu der Längsachse des mit den Kohlebürsten verbundenen Elektromotors verstanden werden. Dies hat den Vorteil, dass die Lufteinlassöffnungen räumlich nah an dem Elektromotor angeordnet sind und somit eine ausreichende Versorgung des Elektromotors mit Kühlluft sichergestellt werden kann.

Der Gehäusedeckel kann mit dem Gehäuse durch zumindest ein Befestigungselement, beispielhaft einer Schraube und/oder einem Rastelement, lösbar verbunden sein. Die lösbare Verbindung des Gehäusedeckel mit dem Gehäuse der Handwerkzeugmaschine kann mit dem Befestigungselement durch beispielsweise eine Schraubverbindung, eine Rastverbindung oder über eine Verbindung wie sie in der Schrift DE 10 2006 023 039 B3 offenbart ist, erfolgen. Insbesondere kann das Befestigungselement nur mit einem Werkzeug, beispielsweise einem Schraubenzieher, lösbar ausgebildet sein.

Der Gehäusedeckel kann ein Deckelelement zur Befestigung des Gehäusedeckels an dem Gehäuse der Handwerkzeugmaschine und ein Filterhalteelement, das lösbar verbindbar mit dem Deckelelement ausgebildet ist, umfassen. Ein zumindest zweistückiger Aufbau des Gehäusedeckels hat den Vorteil, dass ein Entfernen des Filterhalteelements, zum Beispiel um das Filterelement zu regenerieren oder auszutauschen, nicht das Deckelelement von der Handwerkzeugmaschine löst und somit die inneren Komponenten noch zumindest teilweise von dem Eingriff des Anwenders geschützt sind. Das Befestigungselement des Gehäusedeckels ist insbesondere als Befestigungselement des Deckelelements ausgebildet. Das Befestigungselement des Deckelelements mit der Handwerkzeugmaschine ist vorteilhaft ausschließlich mit einem Werkzeug zu lösen, beispielsweise einem Schraubenzieher, während das Befestigungselement des Filterhaltelements an dem Deckelelement vorteilhaft auch manuell lösbar, insbesondere werkzeuglos, ausgebildet ist.

Das Deckelelement und das Filterhalteelement können beide Lufteinlassöffnungen aufweisen. Durch diese Maßnahmen kann sichergestellt werden, dass der Elektromotor mit ausreichende Kühlluft versorgt wird.

Das Filterelement kann insbesondere zwischen dem Filterhalteelement und dem Deckelelement aufgenommen sein, insbesondere lösbar. Das Filterelement kann bevorzugt radial außen an dem Deckelelement und radial innen an dem Filterhalteelement angeordnet sein. Das Filterelement kann insbesondere an dem Filterhalteelement angebracht sein, beispielhaft durch Verkleben oder Einklipsen. Vorteilhaft durchströmt die Kühlluft auf dem Weg in das Innere des Gehäuses der Handwerkzeugmaschine zumindest ein Filterelement.

Ferner, wie in Anspruch 9 dargestellt, kann das Filterhalteelement des Gehäusedeckels einstückig mit dem Deckelelement des Gehäusedeckels ausgebildet sein. Dies ermöglicht einen kompakten Aufbau des Gehäusedeckels. Das Filterelement kann in dieser alternativen Ausführungsform vorteilhaft an der zu der Handwerkzeugmaschine zugewandten Seite angeordnet sein.

Des Weiteren kann die Handwerkzeugmaschine mit einem Gehäuse, einem Elektromotor mit zumindest einer Kohlebürste, die dazu ausgebildet ist einen elektrischen Kontakt zu einem Kollektor des Elektromotors herzustellen, wobei die Kohlebürste lösbar innerhalb des Gehäuses angeordnet ist und über eine Gehäuseöffnung entnehmbar ist, einen Gehäusedeckel zum Abdecken der Gehäuseöffnung, wobei der Gehäusedeckel als ein lösbarer Teil des Gehäuses ausgebildet sein, wobei der Gehäusedeckel insbesondere einstückig mit einem Filterträgeraufsatz ausgebildet ist. Unter einem Filterträgeraufsatz soll insbesondere ein Aufsatzelement verstanden werden, welches vorteilhaft konturangepasst an dem Außengehäuse angeordnet ist. Der Filterträgeraufsatz kann zumindest teilweise über einer Lufteingangsöffnung des Gehäuses der Handwerkzeugmaschine angeordnet sein. Der Filterträgeraufsatz umfasst zumindest eine Luftdurchlassöffnung und zumindest ein Filterelement. Die Luftdurchlassöffnung des Filterträgeraufsatzes kann derart über einer Lufteingangsöffnung der Handwerkzeugmaschine positioniert sein, dass Kühlluft über die Luftdurchgangsöffnung und die Lufteingangsöffnung in das Gehäuse der Handwerkzeugmaschine strömen kann. Das Filterelement kann vorteilhaft derart angeordnet sein, dass die Kühlluft auf dem Weg in die Handwerkzeugmaschine durch das Filterelement strömt. Der Gehäusedeckel mit dem Filterträgeraufsatz kann über das Befestigungselement des Gehäusedeckels mit der Handwerkzeugmaschine lösbar verbunden werden. Des Weiteren ist es denkbar, dass der Filterträgeraufsatz zusätzliche Befestigungselemente aufweisen kann. Diese zusätzlichen Befestigungselemente können beispielhaft Schrauben oder Rastelemente sein.

### Zeichnungen

Weitere Vorteile ergeben sich aus der folgenden Zeichnungsbeschreibung. In den Zeichnungen sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Fig. 1: Perspektivische Ansicht einer erfindungsgemäßen Handwerkzeugmaschine mit einem Gehäusedeckel.
Fig. 2: Ausschnitt aus einer Seitenansicht einer erfindungsgemäßen Handwerkzeugmaschine mit einem Gehäusedeckel in schematischer Darstellung.
Fig. 3: Alternative Ausführungsform der erfindungsgemäßen Handwerkzeugmaschine mit einem Gehäusedeckel.
Fig. 4: Seitenschnitt einer weiteren Ausführungsform des Gehäusedeckels der erfindungsgemäßen Handwerkzeugmaschine
Fig. 5: Perspektivische Ansicht eines Filterträgeraufsatzes, befestigt an dem Gehäuse der Handwerkzeugmaschine.
Fig. 6: Perspektivische Ansicht einer alternativen Ausführungsform eines Filterträgeraufsatzes, befestigt an dem Gehäuse der Handwerkzeugmaschine.
Fig. 7: Längsschnitt der alternativen Ausführungsform eines Filterträgeraufsatzes befestigt an dem Gehäuse der Handwerkzeugmaschine.
Fig. 8a: Perspektivische Ansicht eines Winkelschleifers.
Fig. 8b: Perspektivische Ansicht eines Hammers.
Fig. 8c: Perspektivische Ansicht einer alternativen Ausführungsform eines Hammers.
Fig. 8d: Perspektivische Ansicht eines Exzenterschleifers.

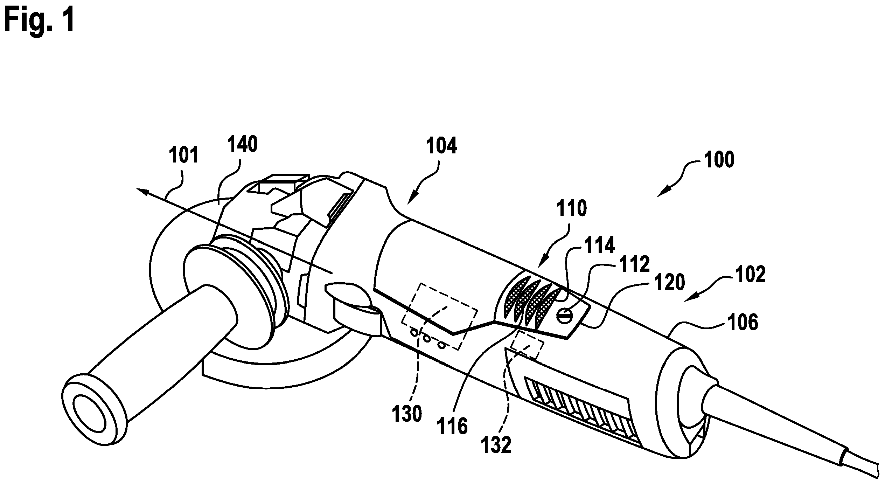

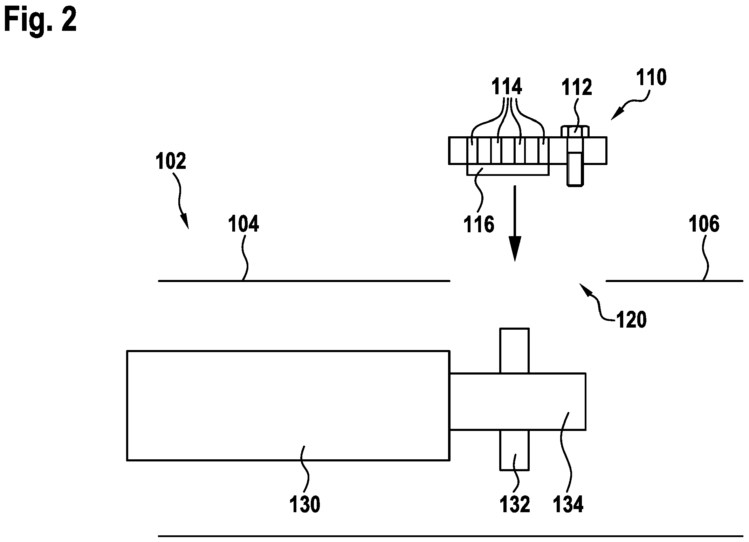

In Fig. 1 ist eine perspektivische Ansicht einer erfindungsgemäßen Handwerkzeugmaschine 100 mit einem Gehäusedeckel 110 gezeigt und in Fig. 2 ist ein Ausschnitt einer Seitenansicht der erfindungsgemäßen Handwerkzeugmaschine 100 mit dem Gehäusedeckel 110 gezeigt. Die Handwerkzeugmaschine 100 ist beispielhaft als ein Winkelschleifer ausgebildet. Die Handwerkzeugmaschine 100 umfasst einen Elektromotor 130 mit Kollektor 134, der an seinem kollektorseitigen Ende eine Kohlebürste 132 aufweist. Die Handwerkzeugmaschine 100 weist ein nicht näher dargestelltes Winkelgetriebe auf, das dazu ausgebildet ist ein Drehmoment von dem Elektromotor 130 auf ein Werkzeug 140 zu übertragen. Das Gehäuse 102 der Handwerkzeugmaschine 100 weist beispielhaft ein Motorgehäuseelement 104, ein Gehäusehinterteilelement 106 und einen Gehäusedeckel 110 auf. Der Gehäusedeckel 110 ist über ein Befestigungselement 112, beispielhaft als Schraube ausgebildet, mit dem Motorgehäuseelement 104 der Handwerkzeugmaschine 100 lösbar verbunden. Der Gehäusedeckel 110 ist in einer Gehäuseöffnung 120 angeordnet. Der Gehäusedeckel 110 ist im Wesentlichen passgenau und im Wesentlichen spielfrei in der Gehäuseöffnung 120 des Gehäuses 102 angeordnet. Der Gehäusedeckel 110 weist eine im Wesentlichen trapezförmige Form auf. Die Gehäuseöffnung 120 ist derart angeordnet, dass die Kohlebürste 132 über die Gehäuseöffnung 120 entnehmbar ist. Beispielhaft ist die Gehäuseöffnung 120 radial zu der Längserstreckung des Elektromotors 130 zumindest teilweise über der Kohlebürste 132 angeordnet. Der Gehäusedeckel 110 weist vier Lufteingangsöffnungen 114 auf, die als ein Zugang für Kühlluft in das Innere des Gehäuses 102 ausgebildet ist. Die Lufteingangsöffnungen 114 des Gehäusedeckels 110 sind beispielhaft im Wesentlich in radialer Richtung zu der Längserstreckung 101 des Elektromotors 130 zumindest teilweise über der Kohlebürste 132 angeordnet. Den Lufteingangsöffnungen 114 sind Filterelemente 116 zugeordnet, die dazu ausgebildet sind, Staub und Werkstoffpartikel zurückzuhalten und ein Eindringen von Staub und Werkstoffpartikel in das Innere des Gehäuses 102 zu verhindern. Die Filterelemente 116 sind beispielhaft in und/oder an den Lufteingangsöffnungen 114 angeordnet.

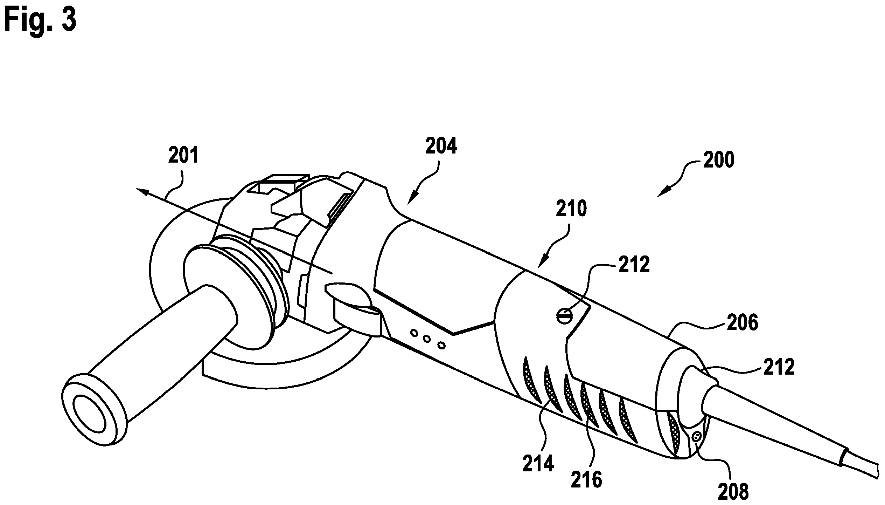

In Fig. 3 ist eine alternative Ausführungsform der erfindungsgemäßen Handwerkzeugmaschine 200 mit einem Gehäusedeckel 210 gezeigt. In dieser alternativen Ausführungsform erstreckt sich der Gehäusedeckel 210 entgegen der Längserstreckung 201 der Handwerkzeugmaschine 200. Beispielhaft ist der Gehäusedeckel 210 axial zwischen dem Motorgehäuse 204 und einem Gehäusetüllendeckel 208 angeordnet. Die Lufteingangsöffnungen 214 sind beispielhaft seitlich und an der Rückseite 222 der Handwerkzeugmaschine angeordnet und mit zumindest einem Filterelement 216 ausgebildet. Die lösbare Befestigung des Gehäusedeckels 210 mit der Handwerkzeugmaschine 200 erfolgt über zumindest ein Befestigungselement 212, insbesondere einer Schraube.

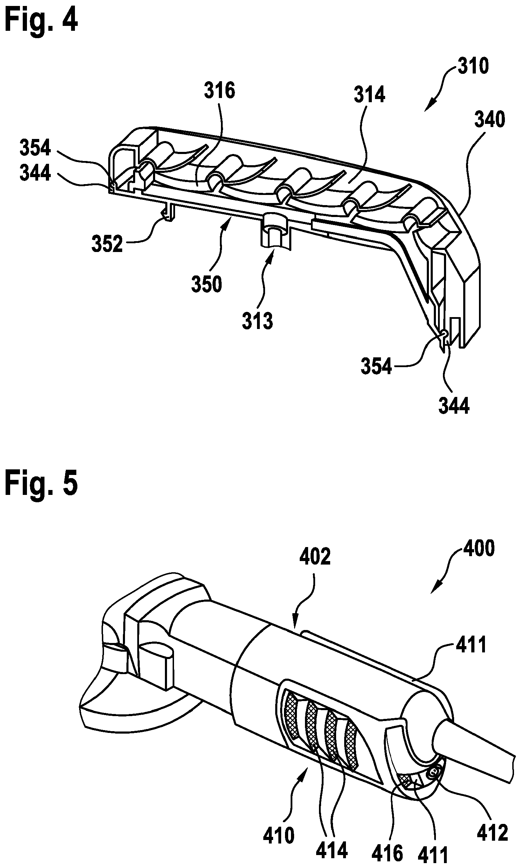

In Fig. 4 ist eine alternative Ausführungsform des Gehäusedeckels 310 gezeigt der verbindbar mit dem Gehäuse 102 der Handwerkzeugmaschine 100 ausgebildet ist. Der Gehäusedeckel 310 in dieser alternativen Ausführungsform umfasst ein Filterhalteelement 340 mit Lufteinlassöffnungen 314, zumindest ein Filterelement 316 und ein Deckelelement 350. Das Deckelelement 350 weist nicht näher dargestellte Lufteinlassöffnungen und zumindest ein nicht näher dargestelltes Befestigungselement, insbesondere eine Befestigungsschraube, auf. Das Befestigungselement kann beispielhaft in einem Schraubdom 313 aufgenommen werden und ist dazu ausgebildet das Deckelelement 350 des Gehäusedeckel 310 über eine Schraubverbindung mit einem Gehäuse einer Handwerkzeugmaschine (nicht dargestellt) zu verbinden. Das Deckelelement 350 weist beispielhaft ein zweites Befestigungsmittel 352 in Form einer Rastnase auf, die mit einer korrespondierenden Geometrie in der Handwerkzeugmaschine verbindbar ausgebildet ist. Weiterhin ist der Deckelelement 350 mit Formschlusselementen 354 ausgebildet, die zur lösbaren Befestigung des Deckelelements 350 mit dem Filterhalteelement 340 vorgesehen sind. Die Verbindung erfolgt durch eine Formschluss der Formschlusselemente 354 des Deckelelement 350 mit korrespondierenden Formschlusselementen 344 des Filterhalteelements 340. Das Filterhalteelement 340 weist Lufteingangsöffnungen 314 auf. Die Lufteingangsöffnungen 314 des Filterhalteelements 340 sind bevorzugt derart angeordnet, dass ein Kühlluftstrom durch die Lufteingangsöffnungen 314 des Filterhalteelements 340 und der Lufteingangsöffnungen des Deckelelements 350 in das Innere eines Gehäuses der Handwerkzeugmaschine eintreten kann. Der Gehäusedeckel 310 weist ferner ein Filterelement 316 auf, das von dem Deckelelement 350 und dem Filterhalteelement 340 im Wesentlichen umschlossen sind.

In Fig. 5 ist ein Filterträgeraufsatz 410 für eine Handwerkzeugmaschine 400 gezeigt. Der Filterträgeraufsatz 410 ist mit dem Gehäuse 402 der Handwerkzeugmaschine lösbar verbindbar ausgebildet. Der Filterträgeraufsatz 410 umfasst ein Filterträgerelement 411. Das Filterträgerelement 411 ist beispielhaft aus einem Kunststoff hergestellt und umgreift die Handwerkzeugmaschine 400 zumindest teilweise seitlich und zumindest teilweise rückseitig. Das Filterträgerelement 411 weist Luftdurchgangsöffnungen 414 auf, die bevorzugt über Lufteingangsöffnungen (nicht dargestellt) im Gehäuse 402 der Handwerkzeugmaschine angeordnet sind. Insbesondere sind in und/oder an den Luftdurchlassöffnungen 414 Filterelemente 416 vorgesehen. Die Kontur des Filterträgerelements 411 des Filterträgeraufsatzes 410 ist vorteilhaft an die Kontur des Gehäuses 402 der Handwerkzeugmaschine 400 angepasst. Der Filterträgeraufsatz 410 weist ein Verbindungselement 412 auf, das dazu vorgesehen ist, eine Verbindung des Filterträgeraufsatzes 410 mit der Handwerkzeugmaschine 400 herzustellen. Das Verbindungselement 412 ist bevorzugt räumlich in der Nähe eines Sicherungselements des Gehäuses 402 der Handwerkzeugmaschine 400 angeordnet. Als Sicherungselement (nicht dargestellt) des Gehäuses 402 ist in Fig. 5 beispielhaft eine Schraubbefestigung eines Gehäusetüllendeckels verwendet. Das Verbindungselement 412 der Filterträgeraufsatzes 410 ist beispielhaft als eine Auslassung oder eine Bohrung ausgebildet. Die Bohrung ist im Wesentlichen über dem Sicherungselement es Gehäuses 402 in Form einer Schraubverbindung des Gehäuses 402 angeordnet. Somit kann über ein gemeinsames Sicherungselements des Gehäuses 402 sowohl das Gehäuseelement, in Form eines Gehäusetüllendeckels, als auch der Filterträgeraufsatz 410 mit der Handwerkzeugmaschine 400 verbunden werden.

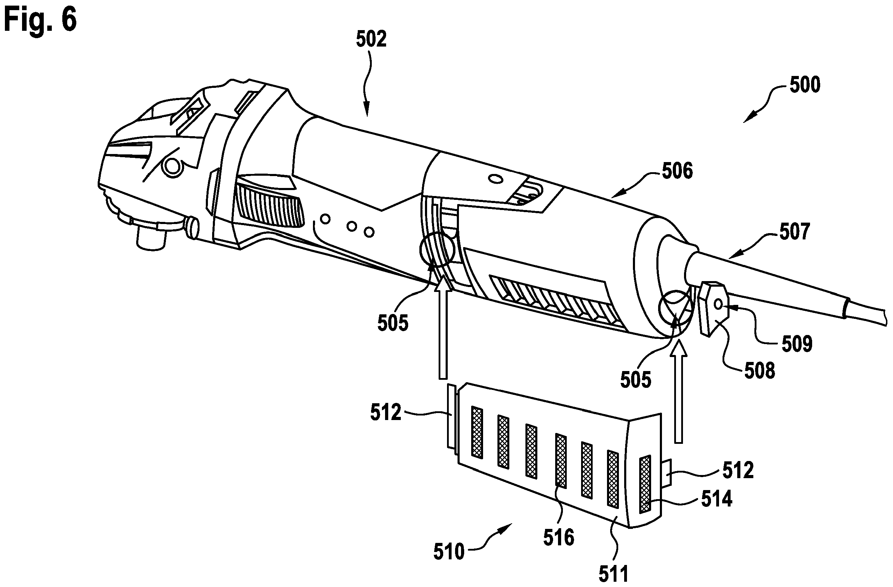

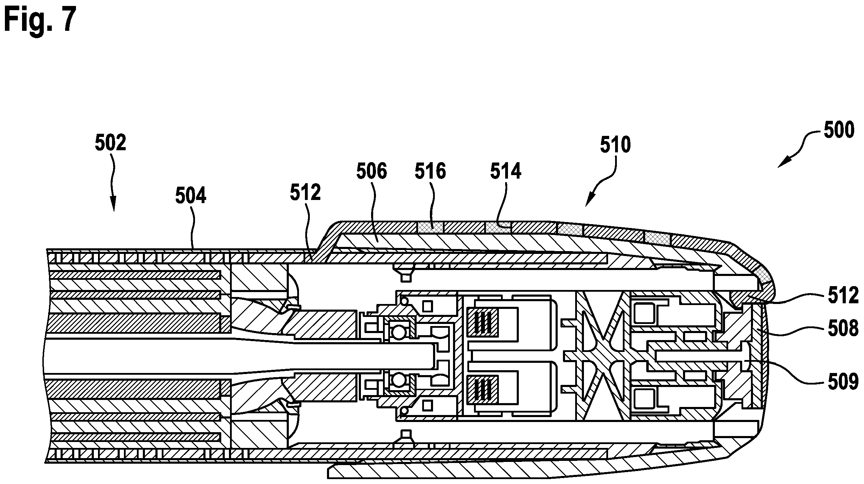

In Fig. 6 und 7 ist eine alternative Ausführungsform eines Filterträgeraufsatzes 510 für eine Handwerkzeugmaschine gezeigt. Das Gehäuse 502 der Handwerkzeugmaschine 500 umfasst mehrere Gehäuseelemente wie beispielsweise ein Motorgehäuse 504, ein Gehäusehinterteilelement 506 und ein Gehäusetüllendeckelelement 508 die lösbar mit dem Gehäuse 502 der Handwerkzeugmaschine 500 befestigbar ausgebildet sind. Die Befestigung erfolgt zumindest teilweise über ein Sicherungselement 509 in Form einer Aufnahmeöffnung für eine Schraubverbindung in dem Gehäusetüllendeckelelement 508. Das Gehäuse 502 weist zwischen dem Motorgehäuse 504 und dem Gehäusehinterteilelement 506 sowie zwischen dem Gehäusehinterteilelement 506 und dem Gehäusetüllendeckelelement 508 jeweils einen Gehäusespalt 505 auf. Sind die Gehäuseelemente des Gehäuses 502 im verbundenen Zustand, so ist der Gehäusespalt 505 im Wesentlichen geschlossen, optisch allerdings noch erkennbar, ausgebildet. Der Filterträgeraufsatz 510 umfasst ein Filterträgerelement 511 und zumindest eine Lufteinlassöffnung 514 denen Filterelemente 516 zugeordnet sind. Der Filterträgeraufsatz 510 weist vorteilhaft zumindest ein Verbindungselement 512 auf, welches dazu ausgebildet ist, eine lösbare Verbindung mit dem Gehäuse 502 der Handwerkzeugmaschine 500 herzustellen. Das Verbindungselement 512 ist beispielhaft als ein Halteelement ausgebildet. Im verbundenen Zustand wie in Fig. 7 gezeigt, ist der Filterträgeraufsatz 510 über die Halteelemente 512 in den Gehäusespalten 505 gehalten und positioniert und über das Sicherungselement 509 der Handwerkzeugmaschine, in welche ein Schraube eingreift, gesichert.

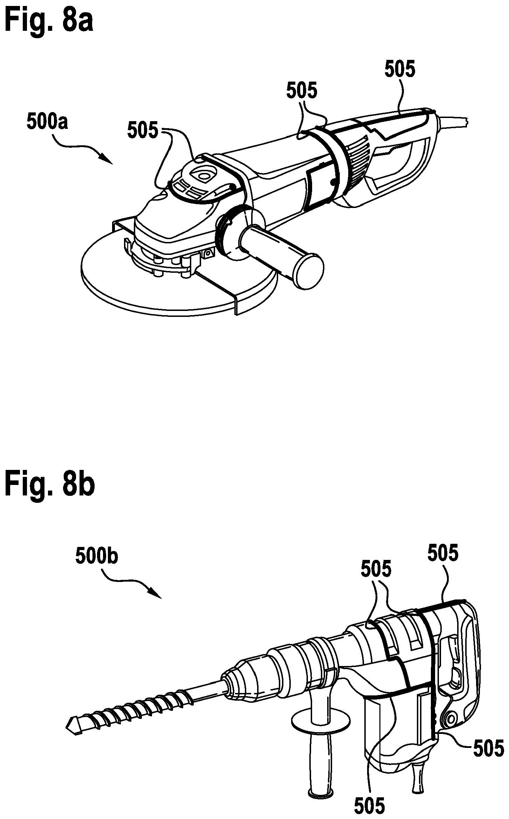

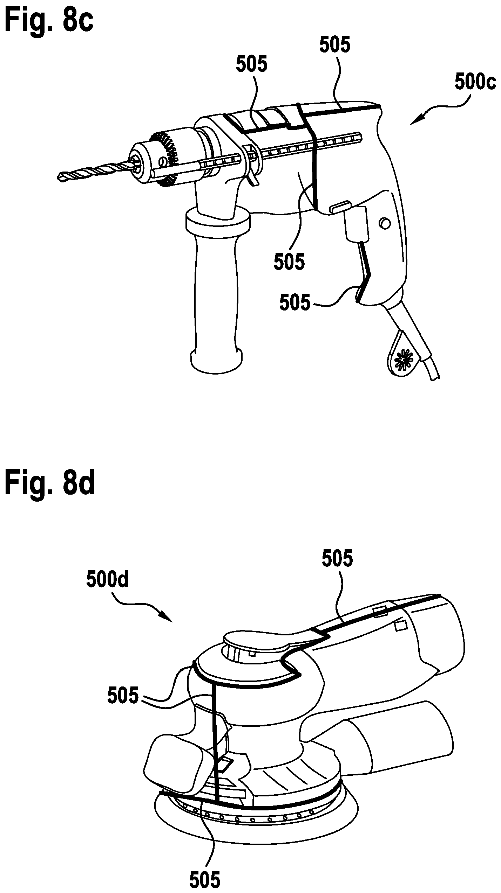

In Fig. 8a bis 8d sind mögliche Anordnungen von Gehäusespalten 505 für unterschiedliche Handwerkzeuge gezeigt. Ein Filterträgeraufsatz 510 mit zumindest einem Verbindungselement 512 ist somit an im Wesentlichen allen Positionen am Gehäuse 502 der Handwerkzeugmaschine 500a,500b,500c,500d anbringbar.

## Patentansprüche

1. Handwerkzeugmaschine aufweisend ein Gehäuse (102), ein Elektromotor (130) mit zumindest einer Kohlebürste (132), die dazu ausgebildet ist, einen elektrischen Kontakt zu einem Kollektor des Elektromotors (130) herzustellen, wobei die Kohlebürste (132) lösbar innerhalb des Gehäuses (102) angeordnet ist und über eine Gehäuseöffnung (120) entnehmbar ist, ein Gehäusedeckel (110; 310) zum Abdecken der Gehäuseöffnung (120), wobei der Gehäusedeckel (110; 310) als ein lösbarer Teil des Gehäuses (102) ausgebildet ist, wobei der Gehäusedeckel (110; 310 ) zumindest eine Lufteinlassöffnung (114; 314) zur Versorgung des Elektromotors (130) mit Kühlluft aufweist, **dadurch gekennzeichnet, dass** an der Lufteinlassöffnung (114) zumindest ein Filterelement (116) angeordnet ist, welche dazu ausgebildet ist, ein Eindringen von Werkstoffpartikel und Staub in das Gehäuse (102) der Handwerkzeugmaschine (100) zu verhindern.

2. Handwerkzeugmaschine nach Anspruch 1, **dadurch gekennzeichnet, dass** das Filterlement (116) lösbar an dem Gehäusedeckel (110) befestigbar ausgebildet ist, insbesondere durch Einklipsen oder Verkleben.

3. Handwerkzeugmaschine nach Anspruch 1-2, **dadurch gekennzeichnet, dass** die zumindest eine Lufteinlassöffnung (114) in der Umgebung der Kohlebürsten (132 ), insbesondere radial außen, angeordnet ist.

4. Handwerkzeugmaschine nach Anspruch 1-3, **dadurch gekennzeichnet, dass** der Gehäusedeckel (110) mit dem Gehäuse (102 ) durch zumindest ein Befestigungselement (112 ), insbesondere eine Schraube und/oder ein Rastelement, verbunden ist.

5. Handwerkzeugmaschine nach Anspruch 1-4, **dadurch gekennzeichnet, dass** der Gehäusedeckel (310 ein Deckelelement (350 ) zur Befestigung des Gehäusedeckels (310 ) an dem Gehäuse (102 ) der Handwerkzeugmaschine (100 ) und ein Filterhalteelement (340 ) umfasst, welches lösbar befestigbar mit dem Deckelelement (350 ) ausgebildet ist.

6. Handwerkzeugmaschine nach Anspruch 5, **dadurch gekennzeichnet, dass** das Deckelelement (350) und das Filterhalteelement (340 )zumindest eine Lufteinlassöffnung (314) aufweisen.

7. Handwerkzeugmaschine nach Anspruch 5-6, **dadurch gekennzeichnet, dass** ein Filterelement (316 ) zwischen dem Filterhalteelement(340 ) und dem Deckelelement (350 ) insbesondere lösbar aufgenommen ist.

8. Handwerkzeugmaschine nach Anspruch 5-7, **dadurch gekennzeichnet, dass** das Filterhalteelement (340 ) des Gehäusedeckels (310) einstückig mit dem Deckelelement (350 ) des Gehäusedeckels (310 ) ausgebildet ist.

9. Handwerkzeugmaschine aufweisend ein Gehäuse (102), ein Elektromotor (130) mit zumindest einer Kohlebürste (132), die dazu ausgebildet ist, einen elektrischen Kontakt zu einem Kollektor des Elektromotors (130) herzustellen, wobei die Kohlebürste (132) lösbar innerhalb des Gehäuses (102 ) angeordnet ist und über eine Gehäuseöffnung (120) entnehmbar ist, ein Gehäusedeckel (110; 310) zum Abdecken der Gehäuseöffnung (120), wobei der Gehäusedeckel (110; 310) als ein lösbarer Teil des Gehäuses (102 ) ausgebildet ist, wobei der Gehäusedeckel (110; 310 ) zumindest eine Lufteinlassöffnung (114; 314) zur Versorgung des Elektromotors (130) mit Kühlluft aufweist, **dadurch gekennzeichnet, dass** der Gehäusedeckel (110 , 310) einstückig mit einem Filterträgeraufsatz ausgebildet ist.

## Claims

1. Hand-held power tool having a housing (102), an electric motor (130) with at least one carbon brush (132) which is designed to establish electrical contact with a collector of the electric motor (130), wherein the carbon brush (132) is arranged releasably within the housing (102) and is removable via a housing opening (120), a housing cover (110; 310) for covering the housing opening (120), wherein the housing cover (110; 310) is in the form of a releasable part of the housing (102), wherein the housing cover (110; 310) has at least one air inlet opening (114; 314) for supplying the electric motor (130) with cooling air, **characterized in that** at least one filter element (116) is arranged at the air inlet opening (114), said air inlet opening being designed to prevent ingress of material particles and dust into the housing (102) of the hand-held power tool (100).

2. Hand-held power tool according to Claim 1, **characterized in that** the filter element (116) is designed to be releasably fastenable to the housing cover (110), in particular by being clipped in place or by adhesive bonding.

3. Hand-held power tool according to Claims 1-2, **characterized in that** the at least one air inlet opening (114) is arranged in the vicinity of the carbon brushes (132), in particular radially on the outside.

4. Hand-held power tool according to Claims 1-3, **characterized in that** the housing cover (110) is connected to the housing (102) by at least one fastening element (112), in particular a screw and/or a latching element.

5. Hand-held power tool according to Claims 1-4, **characterized in that** the housing cover (310) comprises a cover element (350) for fastening the housing cover (310) to the housing (102) of the hand-held power tool (100) and a filter retaining element (340) which is designed to be releasably fastenable to the cover element (350).

6. Hand-held power tool according to Claim 5, **characterized in that** the cover element (350) and the filter retaining element (340) have at least one air inlet opening (314).

7. Hand-held power tool according to Claims 5-6, **characterized in that** a filter element (316) is received, in particular releasably, between the filter retaining element (340) and the cover element (350) .

8. Hand-held power tool according to Claims 5-7, **characterized in that** the filter retaining element (340) of the housing cover (310) is formed in one piece with the cover element (350) of the housing cover (310).

9. Hand-held power tool having a housing (102), an electric motor (130) with at least one carbon brush (132) which is designed to establish electrical contact with a collector of the electric motor (130), wherein the carbon brush (132) is arranged releasably within the housing (102) and is removable via a housing opening (120), a housing cover (110; 310) for covering the housing opening (120), wherein the housing cover (110; 310) is in the form of a releasable part of the housing (102), wherein the housing cover (110; 310) has at least one air inlet opening (114; 314) for supplying the electric motor (130) with cooling air, **characterized in that** the housing cover (110, 310) is formed in one piece with a filter carrier attachment.

## Revendications

1. Machine-outil à main comportant un boîtier (102), un moteur électrique (130) pourvu d'au moins un balai de charbon (132) qui est conçu pour établir un contact électrique avec un collecteur du moteur électrique (130), le balai de charbon (132) étant disposé de manière amovible à l'intérieur du boîtier (102) et pouvant être retiré par une ouverture de boîtier (120), un couvercle de boîtier (110 ; 310) destiné à recouvrir l'ouverture de boîtier (120), le couvercle de boîtier (110 ; 310) étant conçu comme une partie amovible du boîtier (102), le couvercle de boîtier (110 ; 310) comportant au moins une ouverture d'entrée d'air (114 ; 314) destinée à alimenter le moteur électrique (130) en air de refroidissement, **caractérisée en ce qu'**au moins un élément filtrant (116) est disposé sur l'ouverture d'entrée d'air (114) et est conçu pour empêcher les particules de matière et la poussière de pénétrer dans le boîtier (102) de la machine-outil à main (100).

2. Machine-outil à main selon la revendication 1, **caractérisée en ce que** l'élément filtrant (116) est conçu pour être fixé de manière amovible au couvercle de boîtier (110), notamment par clipsage ou collage.

3. Machine-outil à main selon les revendications 1-2, **caractérisée en ce que** l'au moins une ouverture d'entrée d'air (114) est disposée dans l'environnement des balais de charbon (132), notamment radialement à l'extérieur.

4. Machine-outil à main selon les revendications 1 à 3, **caractérisée en ce que** le couvercle de boîtier (110) est relié au boîtier (102) par au moins un élément de fixation (112), notamment une vis et/ou un élément d'encliquetage.

5. Machine-outil à main selon les revendications 1 à 4, **caractérisée en ce que** le couvercle de boîtier (310) comprend un élément de couvercle (350), destiné à fixer le couvercle de boîtier (310) au boîtier (102) de la machine-outil à main (100), et un élément porte-filtre (340) qui est conçu pour pouvoir être fixé à l'élément de couvercle (350) de manière amovible.

6. Machine-outil à main selon la revendication 5, **caractérisée en ce que** l'élément de couvercle (350) et l'élément porte-filtre (340) comportent au moins une ouverture d'entrée d'air (314).

7. Machine-outil à main selon la revendication 5 ou 6, **caractérisée en ce qu'**un élément filtrant (316) est reçu entre l'élément porte-filtre (340) et l'élément de couvercle (350), notamment de manière amovible.

8. Machine-outil à main selon les revendications 5 à 7, **caractérisée en ce que** l'élément porte-filtre (340) du couvercle de boîtier (310) est conçu d'une seule pièce avec l'élément de couvercle (350) du couvercle de boîtier (310).

9. Machine-outil à main comportant un boîtier (102), un moteur électrique (130) comprenant au moins un balai de charbon (132) qui est conçu pour établir un contact électrique avec un collecteur du moteur électrique (130), le balai de charbon (132) étant disposé de manière amovible à l'intérieur du boîtier (102) et pouvant être retiré par une ouverture de boîtier (120), un couvercle de boîtier (110 ; 310) destiné à recouvrir l'ouverture de boîtier (120), le couvercle de boîtier (110 ; 310) étant conçu comme une partie amovible du boîtier (102), le couvercle de boîtier (110 ; 310) comportant au moins une ouverture d'entrée d'air (114 ; 314) destinée à alimenter le moteur électrique (130) en air de refroidissement, **caractérisée en ce que** le couvercle de boîtier (110, 310) est conçu d'une seule pièce avec un embout porte-filtre.
